# EUROPÄISCHE PATENTSCHRIFT

(11) **EP 3 918 682 B1**
(45) Veröffentlichungstag und Bekanntmachung des Hinweises auf die Patenterteilung: **10.01.2024**
(21) Anmeldenummer: 20702087.6
(22) Anmeldetag: 23.01.2020
(51) Int. Cl.: H02G 3/04, F16L 11/20, F16L 11/12, B25J 9/14, H02G 11/00, B29L 24/00

(54) **FÜHRUNGSEINRICHTUNG ZUM FÜHREN WENIGSTENS EINER LEITUNG UND/ODER WENIGSTENS EINES MEDIUMS SOWIE VERWENDUNG EINER SOLCHEN FÜHRUNGSEINRICHTUNG**
GUIDING DEVICE FOR GUIDING AT LEAST ONE LINE AND/OR AT LEAST ONE MEDIUM, AND USE OF SUCH A GUIDING DEVICE
DISPOSITIF DE GUIDAGE CONÇU POUR GUIDER AU MOINS UNE CONDUITE ET/OU AU MOINS UN MILIEU, ET UTILISATION D'UN TEL DISPOSITIF DE GUIDAGE

(30) Priorität: 31.01.2019 DE 102019000691
(43) Veröffentlichungstag der Anmeldung: 08.12.2021
(73) Patentinhaber: Mercedes-Benz Group AG, 70372 Stuttgart (DE)
(72) Erfinder: EHLEITER, Juergen, 73614 Schorndorf (DE); GRAEWER, Marc-Andre, 73240 Wendlingen (DE)
(74) Vertreter: Novagraaf Group
(86) Internationale Anmeldenummer: PCT/EP2020/051552
(87) Internationale Veröffentlichungsnummer: WO 2020/156910

(56) Entgegenhaltungen:
- EP-A1- 2 431 140
- EP-B1- 2 431 140
- JP-A- H0 727 260
- KR-B1- 101 743 881
- KR-B1- 101 743 881
- US-A1- 2014 251 638

## Beschreibung

Die Erfindung betrifft eine Führungseinrichtung zum Führen wenigstens einer Leitung und/oder wenigstens eines Mediums gemäß dem Oberbegriff von Patentanspruch 1. Ferner betrifft die Erfindung eine Verwendung einer solchen Führungseinrichtung.

Derartige Führungseinrichtungen zum jeweiligen Führen wenigstens einer Leitung und/oder wenigstens eines Mediums sind aus dem allgemeinen Stand der Technik bereits hinlänglich bekannt. Die jeweilige Führungseinrichtung weist dabei zumindest ein Führungselement auf, welches zumindest einen Führungskanal begrenzt. In dem Führungskanal ist die Leitung beziehungsweise das Medium aufnehmbar und dadurch, insbesondere entlang des Führungskanals beziehungsweise entlang des Führungselements, zu führen.

In modernen Produktionsanlagen, insbesondere bei einer Serienfertigung von Kraftfahrzeugen wie beispielsweise Kraftwagen, kommen Zuführvorrichtungen für jeweilige, in der Serienfertigung eingesetzte Industrieroboter zum Einsatz. Die jeweilige Zuführvorrichtung ist dabei beispielsweise für einen zumindest ein Gelenk aufweisenden Manipulatorarm, insbesondere des jeweiligen Industrieroboters, vorgesehen und weist üblicherweise ein flexibles beziehungsweise biegbares oder biegeschlaffes Leitungspaket auf, über welches zumindest im Wesentlichen entlang des Manipulatorarms dessen Endeffektor wenigstens ein Prozessmittel zuführbar ist. Die Führungseinrichtung ist dabei beispielsweise Bestandteil der Zuführvorrichtung, wobei beispielsweise das auch als Führungsmantelelement bezeichnete Führungselement das Leitungspaket umschließt. Dabei ist das Führungselement beispielsweise an sich biegeschlaff. Ferner ist beispielsweise die zuvor genannte wenigstens eine Leitung Bestandteil des Leitungspakets, sodass beispielsweise bei der jeweiligen Zuführvorrichtung das insbesondere biegeschlaffe Führungselement die wenigstens eine Leitung umgibt beziehungsweise umschließt. Hierdurch ist die wenigstens eine Leitung in dem Führungskanal aufgenommen und wird mittels des Führungselements geführt.

Die Leitung beziehungsweise das Leitungspaket ist flexibel, das heißt biegeschlaff beziehungsweise biegbar und insbesondere dazu ausgebildet, mittels des Manipulatorarms verformt zu werden. Dadurch folgt das Leitungspaket unter einem Verformen des Leitungspakets zumindest im Wesentlichen einer Bewegung des Manipulatorarms, insbesondere wenn dieser im Raum umherbewegt wird. Die Leitung kann beispielsweise wenigstens ein elektrisches Leitelement, wenigstens ein Fluidleitelement und/oder ein sonstiges Rohr-, Kabel- und/oder Schlauchelement umfassen, sodass mittels der Leitung beziehungsweise mittels des Leitungspakets das Prozessmittel dem Endeffektor zugeführt werden kann und/oder mittels der Leitung kann das Prozessmittel von dem Endeffektor abgeführt werden.

Des Weiteren offenbart die EP 2 431 140 A1 ein flexibles Werkzeug. Der US 2014/251638 A1 ist ein röhrenförmiges Gerät als bekannt zu entnehmen. Aus der KR 101 743 881 B1 ist ein Feuerwehrschlauch bekannt.

Aufgabe der vorliegenden Erfindung ist es, eine Führungseinrichtung und eine Verwendung einer solchen Führungseinrichtung zu schaffen, sodass eine besonders vorteilhafte Führung wenigstens einer Leitung und/oder wenigstens eines insbesondere als Fluid ausgebildeten Mediums realisiert werden kann.

Diese Aufgabe wird durch eine Führungseinrichtung mit den Merkmalen des Patentanspruchs 1 sowie durch eine Verwendung mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Führungseinrichtung zum Führen wenigstens einer Leitung und/oder wenigstens eines Mediums. Vorzugsweise handelt es sich bei der Leitung um einen physischen beziehungsweise physisch vorhandenen, körperlichen Gegenstand, welche beispielsweise fest ist, das heißt in festem Aggregatszustand vorliegt. Bei dem Medium kann es sich beispielsweise um ein Fluid wie beispielsweise eine Flüssigkeit oder um ein Gas handeln. Die Führungseinrichtung umfasst zumindest ein Führungselement, welches zumindest einen Führungskanal begrenzt. In dem Führungskanal ist die Leitung beziehungsweise das Medium aufnehmbar und zu führen. Mit anderen Worten kann die Leitung beziehungsweise das Medium in dem Führungskanal aufgenommen und dadurch entlang des Führungskanals und somit entlang des Führungselements definiert und bedarfsgerecht geführt werden.

Um nun die Leitung beziehungsweise das Medium besonders vorteilhaft, bedarfsgerecht und definiert führen zu können, ist es erfindungsgemäß vorgesehen, dass das Führungselement wenigstens oder genau zwei ineinander angeordnete und biegeschlaffe Lagen aufweist. Unter dem Merkmal, dass die Lagen biegeschlaff sind, ist zu verstehen, dass die Lagen an sich beziehungsweise für sich betrachtet formlabil beziehungsweise flexibel und somit biegbar sind. Wieder mit anderen Worten ausgedrückt sind die Lagen an sich schlaff, sodass sich die Lagen an sich insbesondere dann, wenn sie nicht versteift oder ausgesteift sind, unter ihrem eigenen Gewicht verformen. Unter dem Merkmal, dass die Lagen ineinander angeordnet sind, ist zu verstehen, dass eine erste der Lagen zumindest teilweise, insbesondere zumindest überwiegend oder vollständig, in der zweiten Lage angeordnet ist, sodass die erste Lage zumindest teilweise, insbesondere zumindest überwiegend oder vollständig, innerhalb der zweiten Lage angeordnet ist. Dies bedeutet, dass die zweite Lage zumindest einen Längenbereich der ersten Lage außenumfangsseitig und dabei vorzugsweise in Umfangsrichtung der ersten Lage vollständig umlaufend umgibt. Die erste Lage ist somit eine innere Lage, während die zweite Lage eine die innere Lage zumindest teilweise umgebende äußere Lage ist.

Die Lagen begrenzen ein zwischen den Lagen angeordnetes Kammersystem, welches mehrere, mit einem auch als Aussteifungsfluid oder Versteifungsfluid bezeichneten Fluid beaufschlagbare Kammern aufweist. Dabei sind die Lagen, insbesondere an sich, für das Fluid dicht, sodass das Versteifungsfluid nicht durch die Lagen per se hindurch strömen kann. Der Führungskanal ist direkt durch die innere Lage begrenzt, sodass der Führungskanal auf einer der äußeren Lage abgewandten und auch als Innenseite bezeichneten Seite der inneren Lage angeordnet ist beziehungsweise verläuft. Dies bedeutet, dass die innere Lage, insbesondere in radialer Richtung des Führungselements, zwischen dem Führungskanal und dem Kammersystem angeordnet ist, sodass das Kammersystem mittels der inneren Lage, insbesondere vollständig und/oder fluidisch, von dem Führungskanal getrennt ist. Strömt beispielsweise das Medium durch den Führungskanal, so wird vorzugsweise eine Vermischung des den Führungskanal durchströmenden Mediums mit dem in dem Kammersystem aufgenommenen Fluid vermieden.

Durch Beaufschlagen des Kammersystems mit dem Versteifungsfluid ist das an sich biegeschlaffe Führungselement versteifbar beziehungsweise aussteifbar und dadurch in einen eigensteifen Zustand überführbar. Mit anderen Worten, unterbleibt eine Beaufschlagung des Kammersystems mit dem Fluid, so ist das Führungselement dadurch, dass die Lagen an sich biegeschlaff sind, biegeschlaff. Ist beziehungsweise wird das Kammersystem jedoch mit dem Aussteifungsfluid beaufschlagt, so ist dadurch das Führungselement ausgesteift, sodass das Führungselement eigensteif beziehungsweise formstabil ist. Unter dem Beaufschlagen des Kammersystems mit dem Fluid ist zu verstehen, dass das Fluid in dem Kammersystem aufgenommen ist beziehungsweise dass das Fluid in das Kammersystem eingeleitet und/oder durch das Kammersystem hindurchgeleitet wird.

Vorzugsweise ist die jeweilige Lage aus einem Kunststoff, insbesondere aus einem thermoplastischen Kunststoff, gebildet. Bei dem Kunststoff kann es sich beispielsweise um TPU (thermoplastisches Urethan) handeln. Vorzugsweise ist die jeweilige Lage an sich für das Medium dicht. Das Führungselement ist beispielsweise ein Schlauchkörper, welcher insbesondere dann, wenn das Fluid zumindest ober ausschließlich Luft umfasst, auch als Belüftungskörper bezeichnet werden kann. Das Führungselement wird beziehungsweise ist beispielsweise durch Beaufschlagen des Kammersystems mit dem Fluid aufgebläht beziehungsweise aufblähbar, sodass das Führungselement ein eigenständiges Blähverhalten aufweisen kann. Das Führungselement ist beispielsweise, insbesondere innen und/oder außen, in Textillagen einhüllbar oder eingehüllt, welche beispielsweise als Gewebelagen ausgebildet sein können. Das Führungselement und die das Führungselement, insbesondere außen und/oder innen, umhüllenden Textillagen bilden beispielsweise ein Gesamtsystem zum Führen des Mediums und/oder der Leitung und somit zum Führen beziehungsweise Leiten von Energie, sodass das Gesamtsystem als ein Energieführungssystem zum Zuführen und/oder Abführen von Energie fungieren beziehungsweise ausgebildet sein kann. Die jeweilige Textillage kann auch als Textil oder Textilgebilde bezeichnet werden beziehungsweise aus einem Textilgebilde gebildet sein. Insbesondere kann die jeweilige Textillage als ein an sich biegeschlaffes Gewebe ausgebildet oder aus einem an sich biegeschlaffen Gewebe gebildet sein.

Mithilfe der Führungseinrichtung ist es möglich, die Leitung beziehungsweise das Medium bedarfsgerecht, gezielt, energieeffizient, aufwandsarm und langlebig zu führen, um dadurch beispielsweise ein technisches Gerät wie beispielsweise einen Endeffektor eines Manipulatorarms, insbesondere eines Industrieroboters, besonders vorteilhaft mit einem Prozessmittel zu versorgen und/oder um das Prozessmittel von dem Gerät abzuführen. Bei dem Prozessmittel handelt es sich beispielsweise um das Medium und/oder um elektrische Energie, welche beispielsweise mittels der Leitung zu dem Endeffektor geführt werden kann. Alternativ oder zusätzlich kann beispielsweise die Leitung beziehungsweise das Medium besonders vorteilhaft von dem Endeffektor abgeführt werden, sodass das Prozessmittel mithilfe der erfindungsgemäßen Führungseinrichtung besonders vorteilhaft von dem Endeffektor abgeführt werden kann. Selbstverständlich kann die erfindungsgemäße Führungseinrichtung jedoch auch für andere, insbesondere industrielle, Anwendungen verwendet werden.

Bei dem Fluid handelt es sich beispielsweise um ein Gas, welches zumindest oder ausschließlich Luft umfasst. Das Kammersystem bildet somit beispielsweise ein Belüftungssystem oder ist Bestandteil eines solchen Belüftungssystems, wobei mittels des Belüftungssystems das Führungselement bedarfsgerecht versteift beziehungsweise ausgesteift und somit eigensteif gehalten werden kann. Da das Führungselement an sich, das heißt wenn es nicht versteift ist, biegeschlaff ist, ist das Führungselement ein auch einfach als Schlauch bezeichneter Führungsschlauch. Da beispielsweise das Beaufschlagen des Kammersystems insbesondere dann, wenn das Fluid zumindest ein Gas, insbesondere zumindest Luft, umfasst, auch als Belüften oder Belüftung bezeichnet wird, wird der Schlauch beispielsweise auch als Belüftungsschlauch bezeichnet. Durch die Ausgestaltung der erfindungsgemäßen Führungseinrichtung kann der Schlauch in seiner Form, Art, Skalierung etc. wahlfrei gefertigt werden und bildet somit beispielsweise ein geschlossenes beziehungsweise für das Fluid dichtes Belüftungselement, welches eine besonders vorteilhafte Führung des Mediums beziehungsweise der Leitung ermöglicht. Das Kammersystem ist beispielsweise ein geschlossenes Kammersystem. Dies bedeutet, dass das Kammersystem beziehungsweise die das Kammersystem bildenden Lagen für das Fluid dicht ist beziehungsweise sind, wodurch das Kammersystem eine eigenständige und vorteilhafte Stützarchitektur oder Stützstruktur bildet. Mittels der Stützstruktur kann das Führungselement durch Beaufschlagen des Kammersystems mit dem Fluid besonders vorteilhaft versteift werden, sodass eine gezielte, definierte und stabile Führung darstellbar ist.

Im Vergleich zu herkömmlichen Lösungen ermöglicht die Erfindung einen Einsatz vorteilhafter beziehungsweise neuer Materialien, wodurch das Führungselement durch vorteilhafte, neue Fertigungsverfahren hergestellt werden kann. Außerdem kann das Führungselement beziehungsweise das Kammersystem einfach und somit zeit- und kostengünstig hergestellt werden.

Die zuvor genannten Textillagen werden beispielsweise mittels eines Textilfertigungsverfahrens hergestellt, mittels welchem beispielsweise die Textillagen miteinander verbunden werden. Ferner ist es denkbar, dass das Führungselement mittels des Textilfertigungsverfahrens beziehungsweise bei der Herstellung der Textillagen mit den Textillagen umhüllt wird. Dabei kann das Kammer- beziehungsweise Belüftungssystem direkt mittels des Textilfertigungsverfahrens, insbesondere in die Textillagen, eingebaut beziehungsweise mit dem Textillagen umhüllt werden, insbesondere während die Textillagen hergestellt werden. Insbesondere können die Textillagen durch eine einfache Textilfertigung hergestellt und somit zeit- und kostengünstig realisiert werden, wobei das Führungselement einfach und kostengünstig mit den Textillagen umhüllt und somit in diesen angeordnet werden kann. Insbesondere kann die erfindungsgemäße Führungseinrichtung für eine Energiezuführung verwendet werden, in deren Rahmen der zuvor beschriebene Endeffektor mit dem Prozessmittel und somit beispielsweise mit Energie versorgt wird. Davon unterschiedliche technologische Anwendungen für die erfindungsgemäße Führungseinrichtung sind jedoch ohne weiteres denkbar.

Da das Fluid beispielsweise zumindest oder ausschließlich oder zumindest überwiegend Luft umfasst, ist das Führungselement pneumatisch versteifbar und somit pneumatisch betreibbar, insbesondere regelbar. Das Fluid wird beispielsweise von einer Fluidquelle bereitgestellt, wobei die Fluidquelle beispielsweise das Fluid, insbesondere geregelt, bereitstellt. Dadurch ist das Führungselement beispielsweise pneumatisch regelbar. Da beispielsweise mittels des erfindungsgemäßen Führungselements das Prozessmittel beziehungsweise Energie zu dem Endeffektor geführt und/oder von dem Endeffektor abgeführt werden kann, kann mittels des erfindungsgemäßen Führungselements beziehungsweise mittels der erfindungsgemäßen Führungseinrichtung eine pneumatisch regelbare und vorzugsweise textile, insbesondere volltextile, Energiezuführung und/oder Energieabführung zu beziehungsweise von einem Endeffektor eines Industrieroboters realisiert werden.

Die biegeschlaffen Lagen sind an jeweiligen Verbindungsstellen direkt miteinander verbunden, sodass die Kammern an den jeweiligen Verbindungsstellen durch die Lagen selbst, insbesondere in Umfangsrichtung und/oder in Längserstreckung des Führungselements, zumindest teilweise voneinander getrennt und somit voneinander unterteilt getrennt sind. Die Kammern können dabei vollständig voneinander fluidisch getrennt sein, oder aber die Kammern sind fluidisch miteinander verbunden, wodurch die Kammern besonders vorteilhaft mit dem Fluid beaufschlagt werden können. Insbesondere können dadurch die Kammern über wenigstens oder genau einen den Kammern gemeinsamen Anschluss mit dem Fluid versorgt und dadurch beaufschlagt werden. Durch das zumindest teilweise Trennen und somit Unterteilen der Kammern voneinander kann jedoch eine besonders hohe Steifigkeit des Führungselements gewährleistet werden.

Dies bedeutet, dass das Trennen der Kammer nicht oder nicht nur durch separat von den Lagen ausgebildete und zusätzlich zu den Lagen vorgesehene Trennelemente erfolgt, sondern die Kammern sind durch die Lagen selbst voneinander getrennt, wodurch die Teileanzahl und somit das Gewicht, die Kosten und der Bauraumbedarf in einem besonders geringen Rahmen gehalten werden können. Vorzugsweise ist die jeweilige Lage an sich, das heißt für sich betrachtet, einstückig ausgebildet.

In vorteilhafter Ausgestaltung der Erfindung sind die Lagen einstückig miteinander ausgebildet. Hierdurch können die Teileanzahl und somit die Kosten besonders gering gehalten werden. Darüber hinaus kann dadurch eine besonders vorteilhafte Dichtheit des Führungselements für das Fluid realisiert werden.

In weiterer Ausgestaltung der Erfindung sind die Lagen als separat voneinander ausgebildete und miteinander verbundene Bauelemente ausgebildet. Dadurch kann das Kammersystem bedarfsgerecht und besonders vorteilhaft dargestellt werden, sodass das Führungselement besonders vorteilhaft versteift werden kann.

Eine weitere Ausführungsform zeichnet sich dadurch aus, dass die Lagen in wenigstens einem jeweiligen Verbindungsbereich miteinander verbunden sind. Insbesondere können die Lagen miteinander vernäht und/oder stoffschlüssig miteinander verbunden und/oder miteinander verschweißt und/oder miteinander verklebt sein. Hierdurch können die Lagen besonders dicht miteinander verbunden werden. Bei dem Verkleben und bei dem Verschweißen handelt es sich um ein stoffschlüssiges Verbinden der Lagen, wodurch die Lagen besonders dicht miteinander verbunden werden können.

Der jeweilige Randbereich ist beispielsweise in einem jeweiligen Endbereich oder an einem jeweiligen Ende der jeweiligen Lage beziehungsweise des Führungselements angeordnet. Mit anderen Worten sind die Lagen vorzugsweise an wenigstens einem jeweiligen Ende der jeweiligen Lage oder an ihren jeweiligen Enden miteinander verbunden, wobei die Lagen vorzugsweise für das Fluid dicht miteinander verbunden sind. Dadurch kann das Führungselement einfach und somit zeit- und kostengünstig hergestellt werden.

Bei einer besonders vorteilhaften Ausführungsform der Erfindung ist das Kammersystem als ein Wabensystem ausgebildet, dessen jeweilige Kammer einen mehreckigen, insbesondere einen zumindest oder genau fünfeckigen oder sechseckigen, Querschnitt aufweist und somit als eine Wabe ausgebildet ist. Dadurch kann in versteiftem Zustand des Führungselements eine besonders hohe Steifigkeit des Führungselements realisiert werden.

Dabei hat es sich als besonders vorteilhaft gezeigt, wenn die Lagen an der jeweiligen Verbindungsstelle miteinander vernäht und/oder stoffschlüssig miteinander verbunden und hierbei beispielsweise miteinander verschweißt und/oder miteinander verklebt sind, wodurch die Lagen besonders dicht miteinander verbunden werden können.

Um eine besonders gezielte und bedarfsgerechte Beaufschlagung des Kammersystems mit dem Fluid realisieren zu können, ist in weiterer Ausgestaltung der Erfindung wenigstens ein separat von den Lagen ausgebildeter und von dem Fluid durchströmbarer Belüftungsanschluss vorgesehen, welcher beispielsweise der zuvor genannte Anschluss sein kann. Über den Belüftungsanschluss kann das Fluid in das Kammersystem eingeleitet werden.

Ein zweiter Aspekt der Erfindung betrifft eine Verwendung einer erfindungsgemäßen Führungseinrichtung. Bei der Verwendung wird die Führungseinrichtung zum Führen der wenigstens einen Leitung und/oder des wenigstens einen Mediums zu und/oder von einem Endeffektor eines Manipulatorarms, insbesondere eines Industrieroboters, verwendet. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische und perspektivische Seitenansicht einer ersten Ausführungsform einer erfindungsgemäßen Führungseinrichtung; und
- Fig. 2: eine schematische und perspektivische Seitenansicht der Führungseinrichtung gemäß einer zweiten Ausführungsform.

In den Fig. sind gleiche oder funktionsgleiche Elemente mit gleichen Bezugszeichen versehen.

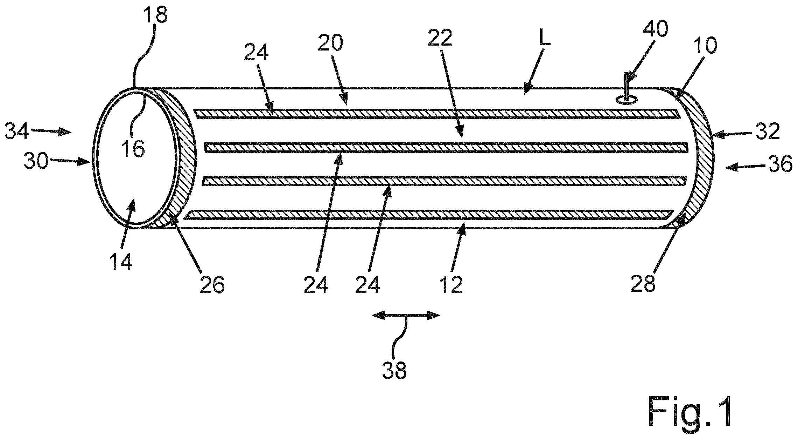

Fig. 1 zeigt in einer schematischen und perspektivischen Seitenansicht eine erste Ausführungsform einer Führungseinrichtung 10 zum Führen wenigstens einer in den Fig. nicht dargestellten Leitung und/oder wenigstens eines Mediums. Bei dem Medium handelt es sich beispielsweise um ein Gas oder eine Flüssigkeit. Mit anderen Worten kann das Medium wenigstens oder genau eine Flüssigkeit und/oder wenigstens oder genau ein Gas umfassen. Die Führungseinrichtung 10 umfasst zumindest ein Führungselement 12, welches zumindest oder vorliegend genau einen Führungskanal 14 begrenzt. In dem Führungskanal 14 ist zumindest ein Längenbereich der wenigstens einen Leitung und/oder das wenigstens eine Medium aufnehmbar und dadurch zu führen. Mit anderen Worten kann die Leitung beziehungsweise das Medium in dem Führungskanal 14 angeordnet und dadurch entlang des Führungskanals 14 und somit entlang des Führungselements 12 geführt werden.

Beispielsweise bei einer Verwendung der Führungseinrichtung 10 zum Führen der Leitung beziehungsweise des Mediums ist die Leitung beziehungsweise das Medium in dem Führungskanal 14 angeordnet und wird mittels des Führungskanals 14 und somit mittels des Führungselements 12, insbesondere entlang des Führungskanals 14 beziehungsweise entlang des Führungselements 12, geführt. Im Rahmen der Verwendung wird das Führungselement 12 beziehungsweise die Führungseinrichtung 10 beispielsweise verwendet, um die Leitung beziehungsweise das Medium zu einem technischen Gerät hinzuführen und/oder von dem technischen Gerät abzuführen. Bei dem technischen Gerät handelt es sich beispielsweise um einen Endeffektor eines Manipulatorarms. Der Manipulatorarm ist beispielsweise Bestandteil eines auch als Industrieroboter bezeichneten Roboters, welche beispielsweise für eine Fertigung, insbesondere eine Serienfertigung, von Kraftfahrzeugen wie beispielsweise Kraftwagen verwendet wird. Der Manipulatorarm wird auch als Roboterarm oder Roboterachse bezeichnet und ist beispielsweise, insbesondere elektrisch und/oder hydraulisch und/oder pneumatisch, im Raum umherbewegbar, sodass der Endeffektor im Raum umherbewegt werden kann. Insbesondere wird die Führungseinrichtung 10 verwendet, um wenigstens ein Prozessmittel zu dem Endeffektor hinzuführen und somit den Endeffektor mit dem Prozessmittel zu versorgen und/oder die Führungseinrichtung 10 wird verwendet, um das Prozessmittel von dem Endeffektor abzuführen. Bei dem Prozessmittel handelt es sich beispielsweise um das zuvor genannte Medium und/oder die zuvor genannte, wenigstens eine Leitung wird genutzt, um das Prozessmittel zu dem Endeffektor hinzuführen und/oder von dem Endeffektor abzuführen. Hierzu weist die Leitung beispielsweise wenigstens einen von dem Prozessmittel durchströmbaren Kanal auf und/oder die Leitung umfasst wenigstens einen elektrischen Leiter, mittels welchem das beispielsweise als elektrische Energie ausgebildete Prozessmittel geführt werden kann.

Insbesondere ist es denkbar, dass ein Leitungspaket zum Einsatz kommt. Das Leitungspaket umfasst beispielsweise mehrere Leitungen, von denen eine die zuvor genannte, wenigstens eine Leitung ist. Das Leitungspaket beziehungsweise die jeweilige Leitung an sich ist formlabil und somit biegeschlaff, wobei die Führungseinrichtung 10 eine gezielte, definierte und bedarfsgerechte Führung der jeweiligen Leitung ermöglicht.

Hierzu weist das Führungselement 12 wenigstens oder genau zwei ineinander angeordnete und an sich beziehungsweise für sich betrachtet biegeschlaffe Lagen 16 und 18 auf. Die jeweilige Lage 16 beziehungsweise 18 ist beispielsweise aus einem Kunststoff, insbesondere aus einem thermoplastischen Kunststoff, gebildet und an sich biegeschlaff, sodass das Führungselement 12 an sich insbesondere dann, wenn das Führungselement 12 nicht versteift ist, biegeschlaff und somit formlabil ist. Unter dem Merkmal, dass die Lagen 16 und 18 ineinander angeordnet sind, ist zu verstehen, dass die auch als erste Lage bezeichnete Lage 16 zumindest teilweise, insbesondere zumindest überwiegend oder vollständig, in der auch als zweite Lage bezeichneten Lage 18 angeordnet ist. Somit ist die Lage 16 eine innere Lage, während die Lage 18 eine äußere Lage ist, die zumindest einen Längenbereich der inneren Lage in Umfangsrichtung der inneren Lage vollständig umlaufend umgibt. Dadurch überlappen sich die Lagen 16 und 18 gegenseitig, insbesondere in radialer Richtung des vorliegend als Schlauch oder biegeschlaffes Rohr ausgebildeten Führungselements 12.

Die Lagen 16 und 18 begrenzen ein, insbesondere in radialer Richtung des Führungselements 12, zwischen den Lagen 16 und 18 angeordnetes Kammersystem 20, welches mehrere, mit einem auch als Aussteifungsfluid oder Versteifungsfluid bezeichneten Fluid beaufschlagbare Kammern 22 aufweist. Bei der in Fig. 1 gezeigten ersten Ausführungsform sind die Kammern 22 fluidisch miteinander verbunden und dabei jedoch an jeweiligen Trennstellen 24, insbesondere in Umfangsrichtung des Führungselements 12, voneinander getrennt und somit voneinander unterteilt. Die Lagen 16 und 18 an sich sind dabei für das Fluid dicht, sodass das Fluid nicht unerwünschterweise aus dem Kammersystem 20 ausströmen kann. Durch Beaufschlagen des Kammersystems 20 beziehungsweise der Kammern 22 mit dem Fluid ist das an sich biegeschlaffe Führungselement 12 versteifbar und dadurch in einen eigensteifen Zustand überführbar. Mit anderen Worten, solange das Fluid, insbesondere in hinreichend großer Menge, in dem Kammersystem 20 aufgenommen ist und/oder das Kammersystem 20 durchströmt, ist das an sich biegeschlaffe und somit formlabile Führungselement 12 ausgesteift und somit in einem eigensteifen Zustand gehalten. Vorzugsweise begrenzen die Lagen 16 und 18 die Kammern 22 direkt, sodass das in dem Kammersystem 20 aufgenommene Fluid die Lagen 16 und 18 direkt berührt beziehungsweise kontaktiert.

Die Lagen 16 und 18 können einstückig miteinander ausgebildet sein. Bei der in Fig. 1 gezeigten ersten Ausführungsform ist es auch vorgesehen, dass die Lagen 16 und 18 als separat voneinander ausgebildete und miteinander verbundene Bauelemente ausgebildet sind. Dabei sind die Lagen 16 und 18 in jeweiligen, endseitigen Verbindungsbereichen 26 und 28s miteinander, insbesondere dicht, verbunden. Vorliegend sind die Verbindungsbereiche 26 und 28 an jeweiligen Enden 30 und 32 des Führungselements 12 und somit der Lagen 16 und 18 angeordnet, sodass die Lagen 16 und 18 an den Enden 30 und 32 dicht miteinander verbunden sind. Dadurch ist das Führungselement 12 an seinen endseitigen Stirnseiten 34 und 36 für das Fluid dicht.

Die Trennstellen 24 sind in Längserstreckungsrichtung des Führungselements 12 zwischen den Enden 30 und 32 und somit zwischen den Stirnseiten 34 und 36 angeordnet, sodass die Kammern 22 in einem in Längserstreckung des Führungselements 12 zwischen den Enden 30 und 32 und somit zwischen den Stirnseiten 34 und 35 angeordneten beziehungsweise verlaufenden Längenbereich L des Führungselements 12 in Umfangsrichtung des Führungselements 12 an den jeweiligen Trennstellen 24 voneinander getrennt sind. Dabei verlaufen die Trennstellen 24 in dem Längenbereich L. Die jeweilige Trennstelle 24 verläuft vorliegend geradlinig und dabei in Längserstreckungsrichtung des Führungselements 12, dessen Längserstreckungsrichtung in Fig. 1 durch einen Doppelpfeil 38 veranschaulicht ist. In von den Trennstellen 24 und von den Verbindungsbereichen 26 und 28 unterschiedlichen Bereichen sind die Lagen 16 und 18 beispielsweise voneinander getrennt beziehungsweise voneinander gelöst oder voneinander lose und somit nicht miteinander verbunden, sodass das Fluid in den genannten Bereichen aufgenommen und die genannten Bereiche durchströmen kann. Dadurch sind die Kammern 22 fluidisch miteinander verbunden.

Bei der ersten Ausführungsform sind die Kammern 22 in dem Längenbereich L ausschließlich in Umfangsrichtung des Führungselements 12 voneinander getrennt, vorliegend an den jeweiligen Trennstellen 24. Die jeweilige Trennstelle 24 ist eine jeweilige Verbindungsstelle, an welcher die Lagen 16 und 18 miteinander verbunden sind. Die vorigen und folgenden Ausführungen zu dem jeweiligen Verbindungsbereich 26 beziehungsweise 28 kann dabei auch auf die jeweilige Verbindungsstelle übertragen werden und umgekehrt. In den Verbindungsbereichen 26 und 28 und an den Trennstellen 24 sind die Lagen 16 und 18 beispielsweise miteinander vernäht und/oder stoffschlüssig miteinander verbunden und dabei beispielsweise miteinander verschweißt und/oder miteinander verklebt. Dadurch können die Lagen 16 und 18 besonders dicht miteinander verbunden werden. Die Führungseinrichtung 10 umfasst darüber hinaus wenigstens oder genau einen Belüftungsanschluss 40, welcher von dem Fluid durchströmbar ist. Über den Belüftungsanschluss 40 kann das beispielsweise zumindest oder ausschließlich Luft umfassende Fluid in das Kammersystem 20 und somit in die Kammern 22 eingeleitet werden, sodass das Kammersystem 20 beziehungsweise die Kammern 22 über den Belüftungsanschluss 40 mit dem Fluid versorgt und dadurch mit dem Fluid beaufschlagt werden können.

Insgesamt ist erkennbar, dass das an sich biegesteife Führungselement 12 als ein Schlauch ausgebildet ist, welcher auch als Belüftungsschlauch, Strumpf oder Basisstrumpf bezeichnet wird. Der Basisstrumpf ist beispielsweise Bestandteil eines Belüftungssystems oder bildet ein Belüftungssystem. Das Belüftungssystem stellt beispielsweise das Fluid bereit, welches in das Kammersystem 20 über den Belüftungsanschluss 40 eingeleitet wird.

Einsatzfelder, für die beziehungsweise in denen die Führungseinrichtung 10 verwendet werden kann, reichen beispielsweise von einer jeweiligen Medienführung in einem industriellen Umfeld bis hin zu den gegenüber anderen, weiteren technischen Anwendungen. So spielt beispielsweise ein Einsatzort für eine Verwendung der Führungseinrichtung 10 keine Rolle, sondern nur dessen technische Eigenschaften und Entwicklung, die es ermöglicht, wenigstens ein Medium oder mehrere Medien und/oder die zuvor genannte wenigstens eine Leitung flexibel in dem beispielsweise eigenstabilen und beispielsweise als ein Gewebesystem ausgebildeten Führungselement 12 zu führen und/oder zu positionieren. Die Führungseinrichtung 10 kann dabei auch für andere Einsatzfelder verwendet oder auf solche Einsatzfelder übertragen werden. Der Belüftungsschlauch kann in seiner Form, Art und Skalierung wahlfrei gefertigt werden und bildet somit ein geschlossenes Belüftungselement, mittels welchem besonders vorteilhaft Medien und/oder Leitungen geführt werden können.

Das Kammersystem 20 ist beispielsweise als ein Wabensystem ausgebildet, dessen jeweilige Kammer 22 beispielsweise als Wabe ausgebildet ist und somit einen mehreckigen, insbesondere fünfeckigen oder sechseckigen, Querschnitt aufweist. Hierdurch kann eine besonders hohe Steifigkeit gewährleistet werden. Das Kammersystem 20 bildet somit eine Stützarchitektur oder Stützstruktur, mittels welcher das Führungselement 12 besonders vorteilhaft ausgesteift werden kann. Die Stützarchitektur ist in der Art der Ausführung, der Anzahl und Form der Kammern 22, des Durchmessers, der Materialstärke, der Materialeigenschaften, der Länge und der flexiblen Positionierung des Belüftungsanschlusses 40 zumindest nahezu frei gestaltbar und an jeweilige Zwecke anpassbar.

Eine Anordnung oder Anbringung des Belüftungsanschlusses 40 an dem Führungselement 12 (Belüftungsschlauch) ist an zumindest nahezu jeder Stelle möglich und wird beispielsweise durch einen technischen Einsatz definiert und kann somit je nach Anwendung variieren. Vorzugsweise wird der Belüftungsanschluss 40 fest mit dem Belüftungsschlauch verbunden und bildet damit eine technische Einheit, insbesondere in Form der Führungseinrichtung 10. Auch die Art und Ausführung des Belüftungsanschlusses 40 ist zumindest nahezu frei wählbar und kann je nach Anwendungsfall variieren.

Der Belüftungsschlauch ist vorzugsweise als ein eigendichtes System ausgeführt und kann entweder mit Prozessluft oder mit einer Einmalbelüftung im Zuge einer Energiezuführung betrieben werden. Mit anderen Worten ist es denkbar, dass beispielsweise das insbesondere als Prozessluft ausgebildete Fluid während eines Betriebs der Führungseinrichtung 10 beziehungsweise des Industrieroboters zumindest im Wesentlichen kontinuierlich beziehungsweise dauerhaft durch das Kammersystem 20 strömt und somit in das Kammersystem 20 an einer ersten Stelle eingeleitet und an einer zweiten Stelle aus dem Kammersystem 20 abgeführt wird. Ferner ist es denkbar, dass zunächst das Fluid in das Kammersystem 20 eingeleitet wird. Danach wird ein Einleiten des Fluids in das Kammersystem 20 beendet, sodass das zuvor eingeleitete Fluid in dem Kammersystem 20 aufgenommen bleibt. Eine Belüftungsstärke, das heißt beispielsweise ein Druck und/oder eine Menge und/oder ein Volumen des Fluids in dem Kammersystem 20 kann zumindest nahezu frei eingestellt werden und ist beispielsweise abhängig von technischen Anforderungen eines entsprechenden Anwendungsfalls.

Durch die Art des Belüftungsschlauchs besteht beispielsweise nun die Möglichkeit, textile Teile eines Basisstrumpfs zum einen in den Belüftungsschlauch einzuführen und zum anderen ein außenliegendes Textil über den Belüftungsschlauch zu führen. Hierdurch wird beispielsweise der Belüftungsschlauch, insbesondere außen und innen, mit Textillagen umhüllt beziehungsweise in Textillagen eingehüllt. Diese drei Teile können dann in ihrer Gesamtheit einen Basisstrumpf im Sinne einer Energiezuführung und/oder Energieabführung bilden. Alle drei Teile werden beispielsweise an, insbesondere bisherigen, Anschlusselemente adaptiert. Durch die Adaption an den Anschlusselementen entsteht beispielsweise eine zusätzliche Variante einer volltextilen und pneumatisch regelbaren Energiezuführung, insbesondere für die Robotertechnik. Ferner kann die Führungseinrichtung 10 für weitere neuartige Medienführungen und außerhalb der Robotertechnik zum Einsatz kommen.

Insgesamt ist es erkennbar, dass das Führungselement 12 ein Schlauchkörper ist, welcher zumindest durch die Lagen 16 und 18 gebildet ist. Die Lagen 16 und 18 sind somit beispielsweise jeweilige Schlauchwände, welche den Belüftungsschlauch bilden. Die Schlauchwände sind beispielsweise an technisch vorteilhaften beziehungsweise erforderlichen Positionen miteinander verbunden. Diese Verbindung kann unterschiedlich erfolgen wie beispielsweise durch Verschweißen und/oder Verkleben und/oder durch ein Fertigungsverfahren in einem Verbund wie zum Beispiel mittels eines Extrudier-Werkzeugs, welches beispielsweise das Kammersystem 20 bei einer Herstellung der Lagen 16 und 18 erstellt. Das dadurch entstandene und auch als Kammerstruktur oder Wabenstruktur bezeichnete Kammersystem 20 bildet einen Luftkörper. Die Verbindungsbereiche 26 und 28 sind Verbindungsstellen und bilden beispielsweise die zuvor genannte Stützarchitektur.

Der Belüftungsanschluss 40 kann in seiner Anschlusstechnik an Anforderungen angepasst werden. Beispielsweise wird an dem Belüftungsanschluss 40 ein von dem Fluid durchströmbarer Schlauch angeschlossen, sodass das Fluid über den Schlauch und den Belüftungsanschluss 40 in das Kammersystem 20 eingeleitet wird. Die Enden 30 und 32 des Schlauchkörpers dienen beispielsweise gemeinsam mit der innenliegenden Lage 16 und der außenliegenden Lage 18 als eine Klemmung auf den zuvor genannten Anschlusselementen. Beispielsweise bildet der Schlauchkörper zusammen mit den beispielsweise als Gewebelagen ausgebildeten Lagen 16 und 18 eine Energiezuführung für eine oder mehrere innengeführte Medien, welche beispielsweise mittels des Führungskanals 14 und dabei durch den Führungskanal 14 hindurch geführt werden.

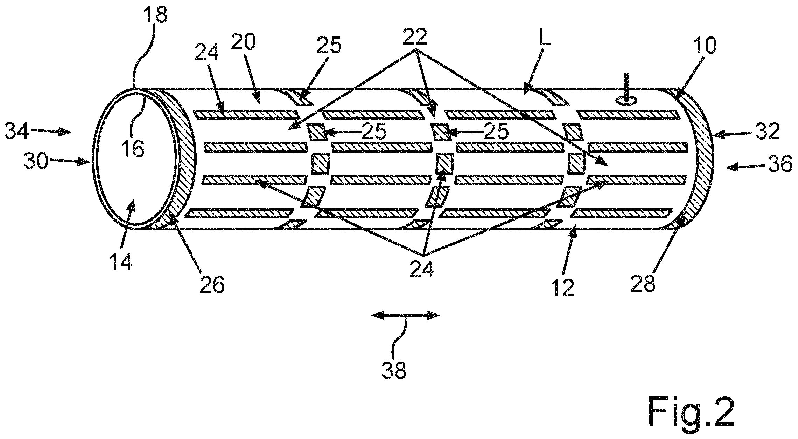

Fig. 2 zeigt eine zweite Ausführungsform der Führungseinrichtung 10. Die zweite Ausführungsform unterscheidet sich insbesondere dadurch von der ersten Ausführungsform, dass die Kammern 22 des Kammersystems 20 in dem Längenbereich L nicht nur in Umfangsrichtung des Führungselements 12 und dabei durch die beziehungsweise an den Trennstellen 24 voneinander getrennt und somit voneinander unterteilt sind, sondern die Kammern 22 sind in dem Längenbereich L auch in Längserstreckungsrichtung des Führungselements 12 voneinander getrennt und somit voneinander unterteilt. Hierzu sind die Lagen 16 und 18 in dem Längenbereich L an jeweiligen, weiteren Verbindungsstellen 25 direkt miteinander verbunden. Somit sind die Verbindungsstellen 25 weitere Trennstellen, an denen die Kammern 22 in Längserstreckungsrichtung des Führungselements 12 voneinander getrennt sind.

## Patentansprüche

1. Führungseinrichtung (10) zum Führen wenigstens einer Leitung und/oder wenigstens eines Mediums, mit zumindest einem Führungselement (12), welches zumindest einen Führungskanal (14) begrenzt, in welchem die Leitung und/oder das Medium aufnehmbar und zu führen ist, wobei das Führungselement (12) wenigstens zwei ineinander angeordnete und biegeschlaffe Lagen (16, 18) aufweist, nämlich eine erste, innere Lage (16) und eine zweite, die innere Lage (16) zumindest teilweise umgebende, äußere Lage (18), wobei die Lagen (16, 18) ein zwischen den Lagen (16, 18) angeordnetes Kammersystem (20) mit mehreren, mit einem Fluid beaufschlagbaren Kammern (22) direkt begrenzen, wobei die Lagen (16, 18) für das Fluid dicht sind, wobei durch Beaufschlagen des Kammersystems (20) mit dem Fluid das an sich biegeschlaffe Führungselement (12) versteifbar und dadurch in einen eigensteifen Zustand überführbar ist, und wobei der Führungskanal (14) direkt durch die erste, innere Lage (16) begrenzt ist,
**dadurch gekennzeichnet, dass**
die biegeschlaffen Lagen (16, 18) an jeweiligen Verbindungsstellen (24, 25) direkt miteinander verbunden sind, sodass die Kammern (22) an den jeweiligen Verbindungsstellen (24, 25) durch die Lagen (16, 18) selbst voneinander getrennt sind.

2. Führungseinrichtung (10) nach Anspruch 1,
**dadurch gekennzeichnet, dass**
die Lagen (16, 18) einstückig miteinander ausgebildet sind.

3. Führungseinrichtung (10) nach Anspruch 1,
**dadurch gekennzeichnet, dass**
die Lagen (16, 18) als separat voneinander ausgebildete und miteinander verbundene Bauelemente ausgebildet sind.

4. Führungseinrichtung (10) nach einem der vorhergehenden Ansprüche,
**dadurch gekennzeichnet, dass**
die Lagen (16, 18) in wenigstens einem jeweiligen Verbindungsbereich (26, 28) miteinander verbunden sind.

5. Führungseinrichtung (10) nach einem der vorhergehenden Ansprüche,
**dadurch gekennzeichnet, dass**
das Kammersystem (20) als ein Wabensystem ausgebildet ist, dessen jeweilige Kammer (22) einen mehreckigen Querschnitt aufweist.

6. Führungseinrichtung (10) nach einem der vorhergehenden Ansprüche,
**dadurch gekennzeichnet, dass**
die Lagen (16, 18) an der jeweiligen Verbindungsstelle (24, 25) miteinander vernäht und/oder stoffschlüssig miteinander verbunden und/oder miteinander verschweißt und/oder miteinander verklebt und dadurch miteinander verbunden sind.

7. Führungseinrichtung (10) nach einem der vorhergehenden Ansprüche,
**gekennzeichnet durch**
wenigstens einen separat von den Lagen (16, 18) ausgebildeten und von dem Fluid durchströmbaren Belüftungsanschluss (40), über welchen das Fluid in das Kammersystem (20) einleitbar ist.

8. Verwendung einer Führungseinrichtung (10) nach einem der vorhergehenden Ansprüche, wobei die Führungseinrichtung (10) zum Führen der wenigstens einen Leitung und/oder des wenigstens einen Mediums zu und/oder von einem Endeffektor eines Manipulatorarms verwendet wird.

## Claims

1. Guide device (10) for guiding at least one line and/or at least one medium, comprising at least one guide element (12) which delimits at least one guide channel (14) in which the line and/or the medium can be received and is to be guided, the guide element (12) having at least two flexible layers (16, 18) arranged one inside the other, namely a first, inner layer (16) and a second, outer layer (18) which at least partially surrounds the inner layer (16), the layers (16, 18) directly delimiting a chamber system (20), which is arranged between the layers (16, 18) and has a plurality chambers (22) to which a fluid can be applied, the layers (16, 18) being impermeable to the fluid, it being possible to stiffen the guide element (12) which is flexible per se and to thereby transfer it into an inherently rigid state by applying the fluid to the chamber system (20), and the guide channel (14) being delimited directly by the first, inner layer (16),
**characterized in that**
the flexible layers (16, 18) are directly interconnected at corresponding connection points (24, 25) so that the chambers (22) are separated from one another at the corresponding connection points (24, 25) by the layers (16, 18) themselves.

2. Guide device (10) according to claim 1,
**characterized in that**
the layers (16, 18) are formed integrally with one another.

3. Guide device (10) according to claim 1,
**characterized in that**
the layers (16, 18) are designed as separately formed and interconnected components.

4. Guide device (10) according to any of the preceding claims,
**characterized in that**
the layers (16, 18) are interconnected in at least one corresponding connection region (26, 28).

5. Guide device (10) according to any of the preceding claims,
**characterized in that**
the chamber system (20) is designed as a honeycomb system, the corresponding chamber (22) of which has a polygonal cross section.

6. Guide device (10) according to any of the preceding claims,
**characterized in that,**
at the corresponding connection point (24, 25), the layers (16, 18) are sewn together and/or integrally bonded to one another and/or welded together and/or glued to one another, and are thereby interconnected.

7. Guide device (10) according to any of the preceding claims,
**characterized by**
at least one ventilation connection (40), which is formed separately from the layers (16, 18) and through which the fluid can flow, via which the fluid can be introduced into the chamber system (20).

8. Use of a guide device (10) according to any of the preceding claims, wherein the guide device (10) is used to guide the at least one line and/or the at least one medium to and/or from an end effector of a manipulator arm.

## Revendications

1. Dispositif de guidage (10) pour le guidage d'au moins une conduite et/ou d'au moins un milieu, comportant au moins un élément de guidage (12), lequel limite au moins un canal de guidage (14), dans lequel la conduite et/ou le milieu peut être reçu(e) et doit être guidé(e), l'élément de guidage (12) présentant au moins deux couches (16, 18) disposées l'une dans l'autre et peu résistantes à la flexion, c'est-à-dire une première couche interne (16) et une deuxième couche externe (18) entourant au moins partiellement la couche interne (16), les couches (16, 18) limitant directement un système de chambres (20) disposé entre les couches (16, 18), comportant plusieurs chambres (22) pouvant être alimentées avec un fluide, les couches (16, 18) étant étanches au fluide, l'élément de guidage (12) en soi peu résistant à la flexion pouvant être raidi par l'alimentation du système de chambres (20) avec le fluide et pouvant ainsi être amené à un état de rigidité propre, et le canal de guidage (14) étant limité directement par la première couche interne (16),
**caractérisé en ce que**
les couches (16, 18) peu résistantes à la flexion sont reliées directement l'une à l'autre au niveau de points de liaison (24, 25) respectifs, de telle sorte que les chambres (22) sont séparées les unes des autres au niveau des points de liaison (24, 25) respectifs par les couches (16, 18) mêmes.

2. Dispositif de guidage (10) selon la revendication 1,
**caractérisé en ce que**
les couches (16, 18) sont formées d'une seule pièce l'une avec l'autre.

3. Dispositif de guidage (10) selon la revendication 1,
**caractérisé en ce que**
les couches (16, 18) sont formées en tant que composants formés séparément l'un de l'autre et reliés l'un à l'autre.

4. Dispositif de guidage (10) selon l'une des revendications précédentes,
**caractérisé en ce que**
les couches (16, 18) sont reliées l'une à l'autre dans au moins une zone de liaison (26, 28) respective.

5. Dispositif de guidage (10) selon l'une des revendications précédentes,
**caractérisé en ce que**
le système de chambres (20) est formé en tant que système alvéolaire, dont la chambre (22) respective présente une coupe transversale polygonale.

6. Dispositif de guidage (10) selon l'une des revendications précédentes,
**caractérisé en ce que**
les couches (16, 18) sont, au niveau du point de liaison (24, 25) respectif, cousues ensemble et/ou reliées ensemble par complémentarité de matière et/ou soudées ensemble et/ou collées ensemble et ainsi reliées l'une à l'autre.

7. Dispositif de guidage (10) selon l'une des revendications précédentes,
**caractérisé par**
au moins un raccordement pour la mise à l'air (40) formé séparément des couches (16, 18) et pouvant être traversé par le fluide, à travers lequel le fluide peut être introduit dans le système de chambres (20).

8. Utilisation d'un dispositif de guidage (10) selon l'une des revendications précédentes, le dispositif de guidage (10) étant utilisé pour guider l'au moins une conduite et/ou l'au moins un milieu vers et/ou à partir d'un effecteur terminal d'un bras de manipulateur.
